# EUROPEAN PATENT SPECIFICATION

(11) **EP 1 039 715 B1**
(45) Date of publication and mention of the grant of the patent: **28.08.2002**
(21) Application number: 99125994.6
(22) Date of filing: 28.12.1999
(51) Int. Cl.: H04L 27/26, H04N 7/24

(54) **OFDM transmission signal repeater**
Zwischenverstärker eines OFDM-Übertragungssignals
Répéteur d'un signal de transmission MDFO

(30) Priority: 25.03.1999 JP 8141799; 25.03.1999 JP 8141899
(43) Date of publication of application: 27.09.2000
(73) Proprietor: KABUSHIKI KAISHA TOSHIBA, Kawasaki-shi, Kanagawa-ken 210-8572 (JP)
(72) Inventor: Suga, Masaru, 1-1-1 Shibaura, Minato-ku Tokyo 105-8001 (JP)
(74) Representative: HOFFMANN - EITLE

(56) References cited:
- EP-A- 0 673 131
- EP-A- 0 762 702
- EP-A- 0 772 310
- EP-A- 0 869 645
- WO-A-98/32267
- WO-A-98/37649

## Description

The present invention relates to an OFDM (orthogonal frequency division multiplexing) transmission signal repeater used for the digital transmission of a transmitter for repeating, for example, medium waves, short waves, waves for a terrestrial, satellite or cable television system and the like.

The development of a digital terrestrial broadcasting system, as a future generation digital boradcasting system, utilizing TV frequency bands by way of present ground waves is underway. As a standard transmission system therefore, an OFDM (orthogonal frequency multiplexing) system has been adopted in Japan and European countries. In addition, there is proposed the application of the OFDM system to not only terrestrial broadcasting but also medium waves, short waves and digital broadcasting such as satellite/cable television boradcasting.

Meanwhile, the broadcasting system is required to use repeaters so as to expand broadcasting service areas and to eliminate dead zone areas. To meet that demand, in the conventional analog television broadcasting, transmission path characteristics are measured at points at which repeaters are installed and the frequency characteristics of filters provided in the IF stages of the respective repeaters are adjusted based on the inverse transmission characteristics to the above charactericstics so as to suppress the distortion of transmission paths from a transmitter to the repeaters.

The analog system cannot be, however, applied to a digital system. In case of a digital system, it is required to more accurately compensate for the distortion of transmission paths such as multipath. Present compensation used in the analog system cannot be utilized for a digital system. This is because a digital system is required to detect and compensate for varying transmission path characteristics.

As stated above, if repeaters are used in OFDM system digital boradcasting, it is necessary to accurately compensate for the distortion of transmission paths from the transmitter to the repeaters and the wraparound components of transmission waves of the repeaters themselves. Nevertheless, the compensation technique for use in the conventional analog system cannot be used for the digital system and it has been difficult to appropriately compensate for transmission path characterisctis varying according to season, weather or time.

EP-A-0 762 702 discloses an OFDM transmission signal receiver for receiving an OFDM transmission signal including data signals having a known amplitude and phase characteristics and carried on sub-carriers of the OFDM transmission signal. The receiver comprises a demodulation means for demodulating a reception signal of a OFDM transmission signal, a conversion means for converting a demodulation output of the demodulation means from a time domain signal into a frequency domain signal, a data signal extraction means for extracting the data signals having known amplitude and phase characteristics in the OFDM tansmission signal from an output of the conversion means, a frequency characteristic detection means for detecting an amplitude frequency characteristics and a phase frequency characteristics of the reception signal using the data signals extracted by the data signal extraction means, a compensation quantity operation means for operating an amplitude compensation quantity and a phase compensation quantity from the ampitude frequency characteristics and the phase frequency characteristic detected by the frequency characteristic detection means and compensation means for compensating for an amplitude and a phase of the received OFDM transmission signal in accordance with the amplitude compensation quantity and the phase compensation quantity obtained by the compensation quantity operation means. A similar strucutre is known from EP-A-0 869 645.

However, the above structure of the prior art is only applicable when the OFDM signal is a digital signal of a synchronous modulation system and may not be used where a digital signal of a different modulation system is transmitted.

The present invention has been made to solve the above-stated disadvantages. It is an object of the present invention to provide an OFDM trnamission signal repeater capable of easily adjusting frequency characteristics and appropriately compensating for transmission path characteristics varying according to season, weather or time.

According to the invention , an OFDM transmission signal repeater is provided for receiving an OFDM (orthogonal frequency division multiplexing) transmission signal including pilot signals having known amplitude and phase characteristics and carried on sub-carriers of the OFDM transmission signal, and for re-transmitting the OFDM transmission signal, the repeater comprises: demodulation means for demodulating a reception signal of the OFDM transmission signal; conversion means for converting a demodulation output of the demodulation means from a time domain signal into a frequency domain signal; pilot signal extraction means for extracting the pilot signals having known amplitude and phase characteristics in the OFDM transmission signal from an output of the conversion means; frequency characteristics detection means for detecting an amplitude frequency characteristics and a phase frequency characteristics of the reception signal or the retransmission signal using the pilot signals extracted by the pilot signal extraction means; a compensation quantity operation means for operating an amplitude compensation quantity and a phase compensation quantity from the amplitude frequency characteristics and the phase frequency characteristics detected by the frequency characteristics detection means; and compensation means for compensating for an amplitude and a phase of the received OFDM transmission signal in accordance with the amplitude compensation quantity obtained by the compensation quantity operation means and for generating a re-transmission signal, wherein when the OFDM transmission signal transmits a digital signal of a differential modulation system, the frequency characteristics detection means detects a delay of the frequency domain signal converted from the time domain signal in frequency domain direction, obtains and integrates variations in amplitude and phase between adjacent sub-carriers, obtains relative the amplitudes frequency characteristics and relative the phase frequency characteristics of the sub-carriers and adds together integral outputs while using the amplitudes and phases of the pilot signals of the respective sub-carriers extracted by the pilot signal extraction means as reference values, and thereby obtains amplitudes frequency characteristics and phases frequency characteristics of all of the sub-carriers.

Further, according to the invention an OFDM transmission signal repeater is provided for receiving an OFDM (orthogonal frequency division multiplexing) transmission signal including pilot signals having known amplitude and phase characteristics and carried on sub-carriers of the OFDM transmission signal, and for re-transmitting the OFDM transmission signal, the repeater comprises: demodulation means for demodulating a reception signal of the OFDM transmission signal; conversion means for converting a demodulation output of the demodulation means from a time domain signal into a frequency domain signal; pilot signal extraction means for extracting the pilot signals having known amplitude and phase characteristics in the OFDM transmission signal from an output of the conversion means; frequency characteristics detection means for detecting an amplitude frequency characteristics and a phase frequency characteristics of the reception signal or the re-transmission signal using the pilot signals extracted by the pilot signal extraction means; a compensation quantity operation means for operating an amplitude compensation quantity and a phase compensation quantity from the amplitude frequency characteristics and the phase frequency characteristics detected by the frequency characteristics detection means; and compensation means for compensating for an amplitude and a phase of the received OFDM transmission signal in accordance with the amplitude compensation quantity obtained by the compensation quantity operation means and for generating a re-transmission signal, wherein when bands of the OFDM transmission signal are divided into hierarchies and the respective hierarchies selectively adopt one of a synchronous modulation and a differential modulation system, the frequency characteristics detection means comprises a synchronous hierarchy characteristic detection section for interpolating the pilot signals of the respective sub-carriers extracted by the pilot signal extraction means in symbol units in time direction and detecting overall amplitudes frequency characteristics and overall phases frequency characteristics; and a differential hierarchy characteristic detection section for detecting a delay of the frequency domain signal converted from the time domain signal in frequency domain direction, obtaining and integrating variations in amplitude and phase between adjacent sub-carriers, obtaining relative the amplitudes frequency characteristics and relative the phase frequency characteristics of the sub-carriers, adding together integral outputs while using the amplitudes and phases of the pilot signals of the respective sub-carriers extracted by the pilot signal extraction means as reference values, and thereby obtaining amplitudes frequency characteristics and phases frequency characteristics of all of the sub-carriers; and the compensation quantity operation means selectively switches and uses a detection result of the synchronous hierarchy characteristic detection section and a detection result of the differential hierarchy characteristic section in accordance with a content of each hierarchy.

According to an advantageous embodiment of the OFDM transmission signal repeater according to the invention, the compensation quantity operation means generates a compensation signal on a frequency domain; and the compensation means compensates for an amplitude and a phase of the received OFDM signal on the frequency domain.

According to another advantageous embodiment of the OFDM transmission signal repeater according to the invention, the compensation quantity operation means generates a compensation signal on a time domain; and the compensation means compensates for an amplitude and a phase of the received OFDM signal on the time domain.

According to another advantageous embodiment of the OFDM transmission signal repeater according to the invention, the compensation quantity operation means converts the amplitude frequency characteristics and the phase frequency characteristics detected by the frequency characteristics detection means into time domain characteristics and obtains inverse characteristics to the time domain characteristics, thereby operating the amplitude compensation quantity and the phase compensation quantity on the time domain.

According to another advantageous embodiment of the OFDM transmission signal repeater according to the invention, the compensation quantity operation means converts inverse characteristics to both the amplitude frequency characteristics and the phase frequency characteristics detected by the frequency characteristics detection means and converts the obtained time domain characteristics, thereby operating the amplitude compensation quantity and the phase compensation quantity on the time domain.

According to another advantageous embodiment of the OFDM transmission signal repeater according to the invention, a filter is provided for removing unnecessary signal components out of specified bands at least before the demodulation means carries out demodulation processing.

The invention can be more fully understood from the following detailed description when taken in conjunction with the accompanying drawings, in which:
Fig. 1 is a block diagram showing the construction of a repeater for OFDM system digital terrestrial television broadcasting in a first embodiment according to the present invention;
FIG. 2 shows an example of the layout of pilot signals utilized in the first embodiment;
FIG. 3 is a block diagram showing the construction of a repeater for OFDM system digital terrestrial television broadcasting in a second embodiment according to the present invention;
FIG. 4 is a block diagram showing the construction of a repeater for OFDM system digital terrestrial television broadcasting in a third embodiment according to the present invention;
FIG. 5 is a block diagram showing the construction of a repeater for OFDM system digital terrestrial television broadcasting in a fourth embodiment according to the present invention;
FIG. 6 is a block diagram showing the construction of a repeater for OFDM system digital terrestrial television broadcasting in a fifth embodiment according to the present invention;
FIG. 7 is a block diagram showing the specific construction of a compensator utilized in the fifth embodiment;
FIG. 8 is a block diagram showing the construction of a repeater for OFDM system digital terrestrial television broadcasting in a sixth embodiment according to the present invention;
FIG. 9 is a block diagram showing the construction of a repeater for OFDM system digital terrestrial television broadcasting in a seventh embodiment according to the present invention; and
FIG. 10 is a block diagram showing the construction of a repeater for OFDM system digital terrestrial television broadcasting in an eighth embodiment according to the present invention.

Now, the embodiments of the present invention will be described in detail with reference to the accompanying drawings.

### [First Embodiment]

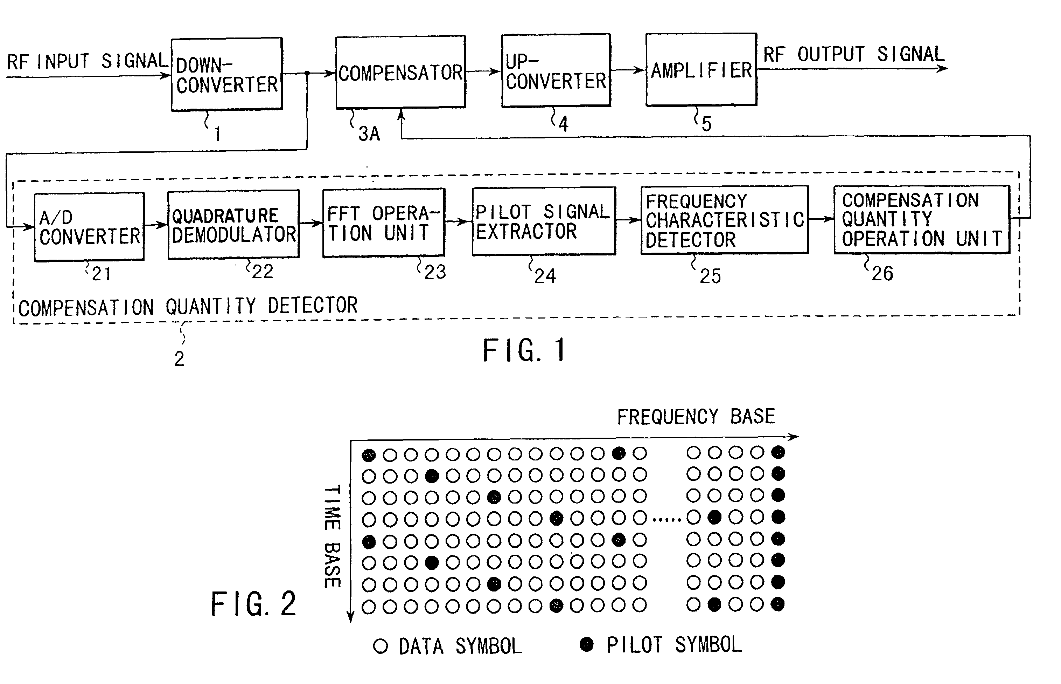

FIG. 1 shows the construction of a repeater in the first embodiment according to the present invention for use in OFDM system digital terrestrial television broadcasting. In FIG. 1, the frequency band of a repeated RF input signal is converted from a radio frequency (RF) band to an intermediate frequency (IF) band to thereby convert the signal into an IF signal by a down-converter 1. The IF signal is input to a compensation quantity detector 2 and a compensator 3A. The compensation quantity detector 2 consists of an A/D converter 21, an quadrature demodulator 22, an FFT (Fast Fourier Transform) operation unit 23, a pilot signal extractor 24, a frequency characteristic detector 25 and a compensation quantity operation unit 26.

The IF signal input into the compensation quantity detector 2 is converted into a digital signal by the A/D converter 21 and demodulated into a baseband signal by the quadrature demodulator 22. The baseband signal is subjected to FFT processing by the FFT operation unit 23, whereby the time domain signal is converted into a frequency domain signal and the resultant signal is supplied to a pilot signal extractor 24.

The pilot signal extractor 24 extracts only pilot signals for amplitude and phase equalization, which have been arranged on the frequency domain in advance, from the frequency domain signal output from the FFT operation unit 23. The pilot signals thus obtained are supplied to the frequency characteristic detector 25. The frequency characteristic detector 25 interpolates the input pilot signals for amplitude and phase equalization, detects the amplitude and phase variations of the interpolated pilot signals and obtains, based on the detection result, the amplitude and phase frequency characteristics of the overall IF signal. The output of the detector 25 is supplied to the compensation quantity operation unit 26. The compensation operation unit 26 obtains inverse characteristics to the amplitude and phase frequency characteristics of the signal indicated by the signal supplied output from the frequency characteristic detector 25 and outputs, as a compensation signal, a signal having the inverse characteristics to the compensator 3A.

The compensator 3A inputs the IF signal from the down-converter 1 and the compensation signal from the compensation quantity detector 2 and then compensates for the amplitude and phase frequency characteristics of the IF signal according to the compensation signal. The compensated IF signal is converted into an RF signal by an up-converter 4, amplified by an amplifier 5 thereby to provide an output signal of the repeater.

Namely, in the Japanese digital terrestrial television broadcasting, it is determined, though as a tentative system, to repeatedly carry pilot signals having known amplitude and phase characteristics on respective sub-carriers on a constant symbol cycle in advance for amplitude and phase equalization. FIG. 2 shows an example of the layout of data symbols and pilot symbols within one frame.

According to the present invention, attention is paid to the pilot signals. The compensation quantity detector 2 sequentially converts an RF signal into an IF signal, a base band signal and a frequency domain signal and extracts pilot signals at sub-carrier intervals aligned on the frequency domain. Since the pilot signals of the respective sub-carriers appear on a constant symbol cycle, they are interpolated in time domain direction. The amplitudes and phases frequency characteristics of the thus obtained pilot signals on a symbol cycle of the respective sub-carriers are detected. The frequency characteristics correspond to the amplitude and phase characteristics of distorted components resulting from multipath or the wraparound of the repeated transmission waves received in the transmission frequency band. Then, a signal having inverse characteristics to the above characteristics is created. Using this signal, the amplitude and phase characteristics of the IF signal, as a main signal, are compensated.

According to the repeater having the above-stated construction, therefore, a compensation signal for correcting the distortion of transmission paths is created from the amplitudes and phases frequency characteristics of pilot signals carried on the OFDM transmission signal while utilizing the pilot signals. This allows easily adjusting the frequency characteristics without using any special measurement unit or the like. Further, since it is possible to obtain the amplitude and phase variations of the pilot signals in symbol units, the transmission path characteristics which vary according to season, weather or time can be appropriately compensated.

### [Second Embodiment]

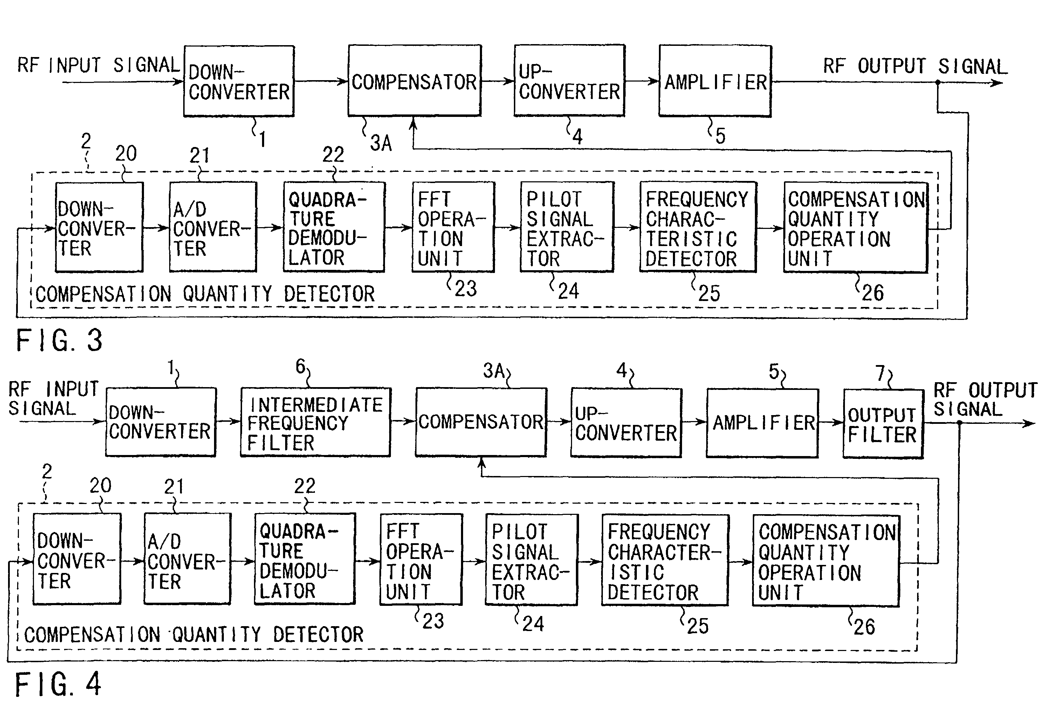

FIG. 3 shows the construction of a repeater in the second embodiment for use in the above-stated OFDM system digital terrestrial television broadcasting. It is noted that the same constituent elements shown in FIG. 3 as those shown in FIG. 1 are denoted by the same reference symbols as those in FIG. 1 and that description thereto will not be given herein.

While the output of the down-converter 1 is input to the compensation quantity detector 2 in the repeater in the first embodiment, the output of an amplifier 5 is input to a compensation quantity detector 2 in the repeater in the second embodiment. In the compensation quantity detector 2 in this case, however, since the output of the amplifier 5 is up-converted, a down-converter 20 is added to the input stage of the detector 2 and an input signal is converted into a baseband signal.

While compensation is carried out in a feed-forward loop in the construction of the first embodiment, compensation is carried out in a feed-back loop in the construction of this embodiment. Due to this, the construction of this embodiment is inferior to that of the first embodiment in the follow-up speed with respect to the distortion of transmission paths. Nevertheless, controlling is based on the output result, so that the construction of this embodiment is advantageous over that of the first embodiment in accuracy. Further, if the up-converter 4 and the amplifier 5 have frequency characteristics, it is possible to compensate for transmission path characteristics including the frequency characteristics.

### [Third Embodiment]

FIG. 4 shows the construction of a repeater in the third embodiment for use in the above-stated OFDM system digital terrestrial television broadcasting. It is noted that the same constituent elements shown in FIG. 4 as those shown in FIGS. 1 and 3 are denoted by the same reference symbols as those in FIGS. 1 and 3 and that description thereto will not be given herein.

The repeater in this embodiment is characterized in that in addition to the construction of the second embodiment, an intermediate frequency filter 6 is provided between a down-converter 2 and a compensator 3 and an output filter 7 is added to the output stage of this repeater, whereby unnecessary signals out of their respective frequency bands are removed. It is noted that the intermediate frequency filter 6 may be provided at a position in back of a compensator 3A.

According to this embodiment, the intermediate frequency filter 6 and the output filter 7 are added to thereby remove unnecessary signal components out of the baseband and the repeating transmission band, respectively. This makes it possible to enhance the detection accuracy of a compensation quantity detector 2 for detecting frequency characteristics and to reduce influence on adjacent transmission bands. Besides, it is possible to compensate for the deterioration of frequency characteristics caused by the intermediate frequency filter 6 and the output filter 7.

Moreover, even in the first embodiment, if an intermediate frequency filter 6 is added in front of the compensation quantity detector 2 and an output filter 7 is added in back of the amplifier 5, it is possible to enhance the detection accuracy of the compensation quantity detector 2 for detecting frequency characteristics and to reduce influence on adjacent transmission bands as in the case of this embodiment. In that case, however, the deterioration of frequency characteristics caused by the output filter 7 cannot be compensated.

### [Fourth Embodiment]

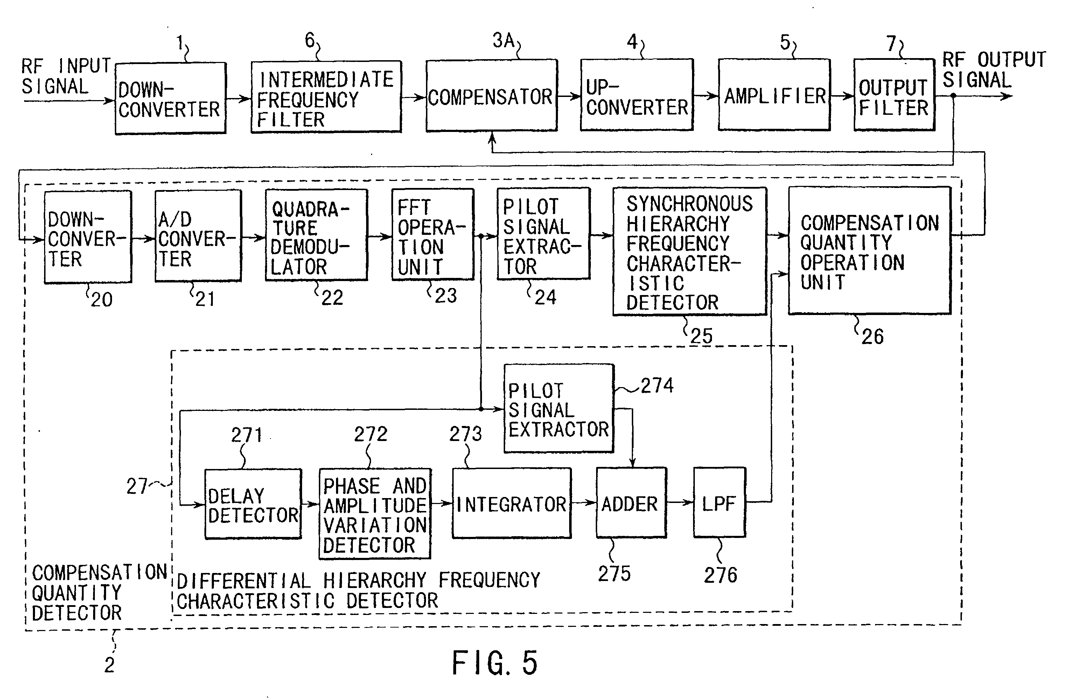

FIG. 5 shows the construction of a repeater in the fourth embodiment for use in the above-stated OFDM system digital terrestrial television broadcasting. It is noted that the same constituent elements shown in FIG. 5 as those shown in FIGS. 1 and 3 are denoted by the same reference symbols as those in FIGS. 1 and 3 and that description thereto will not be given herein.

The repeater in this embodiment is characterized in that the frequency characteristic detector 25 of the compensation quantity detector 2 in the construction of the third embodiment is used as a synchronous hierarchy frequency characteristic detector and that a differential hierarchy frequency characteristic detector.27 is added.

The differential hierarchy frequency characteristic detector 27 inputs the output of an FFT operation unit 23 and conducts delay detection in frequency domain direction using a delay detector 271. Next, the detector 27 obtains variations in amplitude and phase between adjacent carriers using a phase and amplitude variation detector 272 and then integrates the variations using an integrator 273, and thereby obtains the frequency characteristics with respect to the relative amplitude and phase of carries.

Meanwhile, the detector 27 extracts only pilot signals having known phases and amplitudes arranged on the frequency domain from the output signal of the FFT operation unit 23 using a pilot signal extractor 274 and adds the output of the integrator 273 using an adder 275 while the phases and amplitudes of the pilot signals are used as reference values. Thus, phase and amplitude characteristics of all carries are obtains. Finally, the phase and amplitude characteristics of all carries are filtered by an LPF 276 in time domain direction, thereby removing influences of noise and the like received on transmission paths and outputting the result to a compensation quantity operation unit 26. The compensation quantity operation unit 26 selectively switches and uses the detection result of the synchronous hierarchy frequency characteristic detector 25 and that of the differential hierarchy frequency characteristic detector 26.

The technical background and processing contents of the repeater having the above-stated construction will be described hereinafter.

Currently, the establishment of a system called "ISDB-T" is underway so as to standardize digital terrestrial television broadcasting. The system is characterized by not only adopting the OFDM system but also characterized in that the band of the OFDM transmission signal is divided into 13 segments (the combinations of which segments realize hierarchies) (in a 2K mode, 1 segment = 108 carriers), the transmission signal up to three hierarchies can be transmitted and a carrier modulation system such as QPSK, 16QAM or 64QAM can be set for each hierarchy. In addition, DQPSK is adopted as one of the carrier modulation systems in light of mobile reception.

In synchronous segments in which the carrier modulation system is QPSK, 16QAM or 64QAM, an SP (Scattered Pilot) signal (having carriers cyclically scattered in symbol time and carrier frequency directions, modulated with a specific phase and amplitude) is transmitted for equalization processing to be conducted at a receiver side. In differential segments in which the carrier modulation system is DQPSK, an SP signal is not necessary. Due to this, the synchronous segments differ from the differential segments in the number of signals such as CP (Continual Pilot) signals (which are pilot signals having the same symbols at a specific carrier position), AC (Auxiliary Channel) signals (which are additional information transmission signals and for which AC1 and AC2 are specified) and TMCC (Transmission Mode Configuration Control) signals (which are control information transmission signals). In a mode 1, each synchronous segment has nine SP signals, two AC1 signals and one TMCC signal, whereas each differential segment has one CP signal, one AC1 signal, four AC2 signals and five TMCC signals.

As can be seen from the above, the repeater is required to process the segments while separating the synchronous segments and the differential segments. According to the repeater in this embodiment, therefore, the output of the FFT operation unit 23 is distributed to two systems, one for processing the synchronous segments and the other for processing the differential segments. Since the synchronous segments can be processed according to the processing contents described in the preceding embodiments, an detector denoted by reference symbol 25 is used as a synchronous hierarchy frequency characteristic detector. Description will be given to a differential hierarchy frequency characteristic detector 27 hereinafter.

Namely, the differential hierarchy frequency characteristic detector 27 detects the delay of the output of the FFT operation unit 23 in frequency domain direction, obtains and then integrates variations in amplitude and phase between adjacent carriers, and obtains relative amplitude and phase characteristics of carriers. On the other hand, the detector 27 extracts only pilot signals having known phases and amplitudes arranged on the frequency domain from the output signal of the FFT operation unit 23, adds integral outputs while using the phases and amplitudes of the pilot signals as reference values, and obtains the phase and amplitude characteristics of all carriers. Finally, the phase and amplitude characteristics of all carriers are filtered in time domain direction, influences of noise and the like received on the transmission paths are removed and output to the compensation quantity operation unit 26. The compensation quantity operation unit 26 selectively switches and uses the detection result of the synchronous hierarchy frequency characteristic detector 25 and that of the differential hierarchy frequency characteristic detector 27 according to the content of the hierarchy (segment).

With the above-stated construction, even if the transmission band is divided into hierarchies which adopt different modulation systems, synchronous or differential, it is possible to appropriately extract the pilot signals of the respective hierarchies and to obtain the phase and amplitude compensation quantities. As in the case of the preceding embodiments, it is possible to easily adjust the frequency characteristics without using any special measurement unit or the like and to appropriately compensate for transmission path characteristics varying according to season, weather or time.

Needless to say, if the OFDM transmission signal has only one of the synchronous system and differential system, it suffices to prepare a corresponding detector.

Although description has been given to the feed-back loop construction in the fourth embodiment, it is possible to configure the repeater to have the feed-forward loop construction by omitting the down-converter 20 of the compensation quantity detector 2 and inputting the output of the down-converter 1 to the A/D converter 21 of the compensation quantity detector 2 as in the case of the first embodiment.

Further, description has been given to the preceding embodiments, assuming that the OFDM signal includes pilot signals having known amplitudes and phases. In case of, for example, the DBPSK modulation system, it is possible to detect the frequency characteristics of amplitude and phase not by using the pilot signals but by using data and to detect compensation quantities by obtaining the inverse characteristics to the above frequency characteristics.

### [Fifth Embodiment]

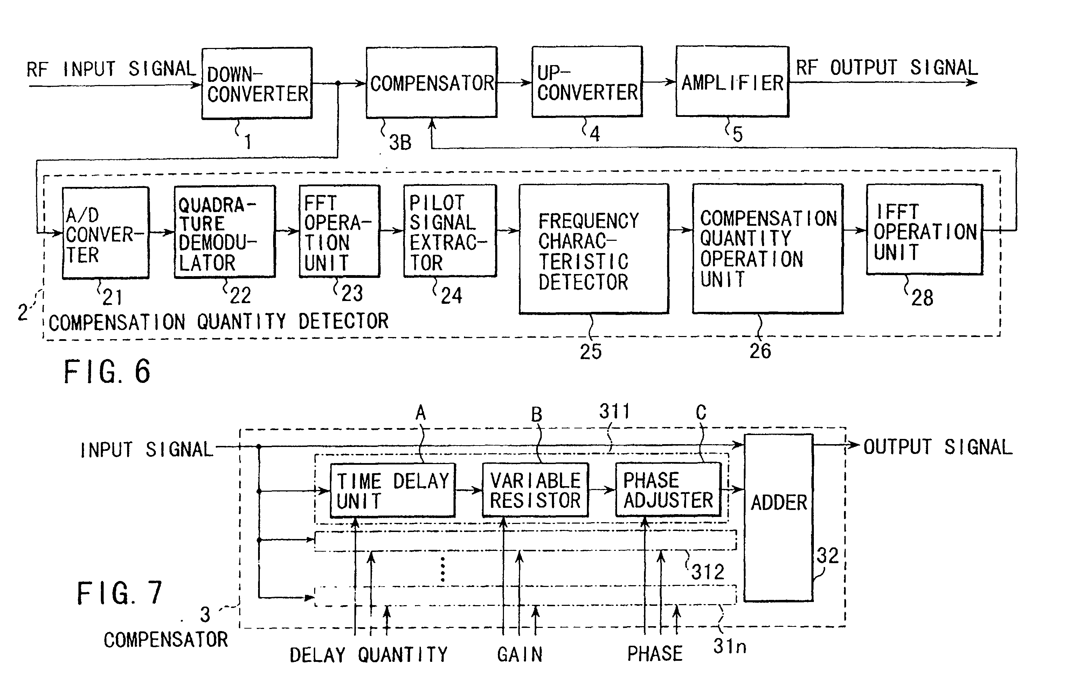

FIG. 6 shows the construction of a repeater in the fifth embodiment for use in OFDM system digital terrestrial television broadcasting. It is noted that the same constituent elements shown in FIG. 6 as those in FIG. 1 are denoted by the same reference symbols as those in FIG. 1 and that description thereto will not be given herein.

While compensation is carried out on the frequency domain in first embodiment, the repeater in this embodiment is characterized by carrying out compensation on the time domain. Namely, in a compensation quantity detector 2, the output of a compensation quantity operation unit 26 is subjected to IFFT (Inverse Fast Fourier Transform) processing by an IFFT operation unit 28 and transformed into a time domain compensation signal. Based on the compensation signal, the amplitude and phase frequency characteristics of an IF signal on the time domain are compensated by a compensator 3B.

The construction of this embodiment will be described in more detail. The compensation quantity operation unit 26 obtains the inverse characteristics to the amplitude and phase frequency characteristics obtained by a frequency characteristic detector 25, and outputs the inverse characteristic as an amplitude (gain) and phase compensation signal with respect to each sub-carrier. This compensation signal is transformed from a frequency domain signal into a time domain signal by the IFFT operation unit 28 and supplied to the compensator 3B as a compensation signal having information on delay quantity, gain and phase.

The compensator 3B inputs an IF signal from a down-converter 1 and the compensation signal from the compensation quantity detector 2, compensates for the amplitude and phase frequency characteristics of the IF signal on the time domain according to the compensation signal, and then outputs a compensated IF signal. It is noted that the specific construction of the compensator 3B is shown in FIG. 7.

In FIG. 7, an OFDM input signal (the IF signal from the down-converter 1) is distributed to n+1 lines and the first line signal is directly supplied to an adder 32 and the second to (n+1)th line signals are supplied to the adder 32 through signal processors 311 to 31n, respectively. The operation result of the adder 32 is output as a compensation result. Each of the signal processors 311 to 31n is constituted by connecting a time delay unit A, a variable resistor B and a phase adjuster C in series. The time delay unit A, the variable resistor B and the phase adjuster C are supplied with a delay quantity compensation signal, a gain compensation signal and a phase compensation signal from the IFFT operation unit 27, respectively.

In other words, the compensator 3B shown in FIG. 7 distributes the OFDM input signal to n+1 lines, shifts the signals on the respective lines by a certain time using the time delay unit A, adjusts the amplitudes of the second to the (n+1)th line signals based on the gain compensation signal using the variable resistor B, adjusts the phases of these signals based on the phase compensation signal using the phase adjuster C and then adds the resultant signals and outputs them using the adder 32. With this construction, real-time convolution processing is realized by an analog circuit and it is possible to compensate for the phase and amplitude of a signal on the time domain.

According to the repeater having the above-stated construction, therefore, while pilot signals carried on the OFDM signal are utilized, a compensation signal for correcting the distortion of transmission paths is generated from the amplitude and phase characteristics of the pilot signals. Thus, it is possible to easily adjust frequency characteristics without using any special measurement unit or the like. Besides, since amplitude and phase variations of the pilot signals can be obtained in symbol units, it is possible to appropriately compensate for transmission path characteristics varying according to season, weather and time.

### [Sixth Embodiment]

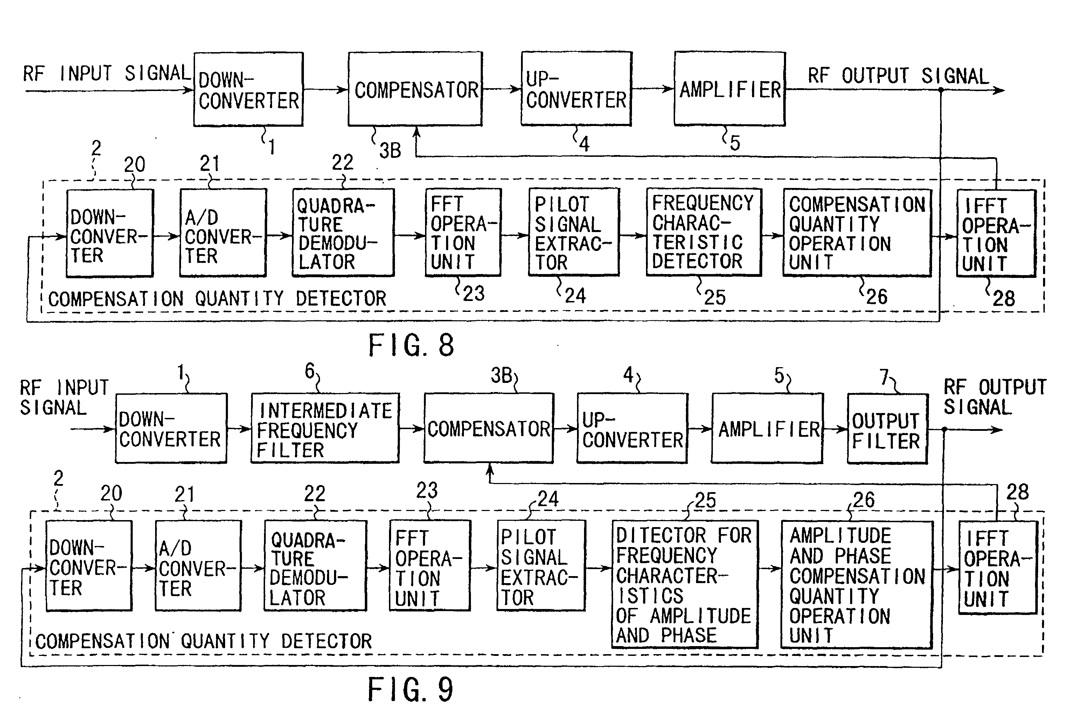

FIG. 8 shows the construction of a repeater in the sixth embodiment for use in the above-stated OFDM system digital terrestrial television broadcasting. It is noted that the same constituent elements shown in FIG. 8 as those in FIG. 6 are denoted by the same reference symbols as those in FIG. 6 and that description thereto will not be given herein.

While the output of the down-converter 1 is input into the compensation quantity detector 2 in the fifth embodiment, the output of an amplifier 5 is input into a compensation quantity detector 2 in the repeater in this embodiment. In the compensation quantity detector 2 in this case, however, since the output of the amplifier 5 is up-converted, it is required to provide a down-converter 20 in the input stage of the detector 2 to convert an input signal into a baseband signal.

While compensation is carried out in a feed-forward loop in the construction of the fifth embodiment, compensation is carried out in a feed-back loop in the construction of this embodiment. Due to this, the construction of this embodiment is inferior to that of the first embodiment in the follow-up speed with respect to the distortion of transmission paths. Nevertheless, since controlling is based on the output result, the construction of this embodiment is advantageous over that of the first embodiment in accuracy. Further, if an up-converter 4 and an amplifier 5 have frequency characteristics, it is possible to compensate for transmission path characteristics including these frequency characteristics.

### [Seventh Embodiment]

FIG. 9 shows the construction of a repeater in the seventh embodiment for use in the above-stated OFDM system digital terrestrial television broadcasting. It is noted that the same constituent elements shown in FIG. 9 as those in FIGS. 6 and 8 are denoted by the same reference symbols as those in FIGS. 6 and 8 and that description thereto will not be given herein.

The repeater in this embodiment is characterized in that in addition to the construction of the sixth embodiment, an intermediate frequency filter 6 is provided between a down-converter 2 and a compensator 3B and an output filter 7 is provided in the output stage of the repeater, thereby removing unnecessary signals out of their respective bands. The intermediate frequency filter 6 may be provided in back of the compensator 3B.

According to this embodiment, the intermediate frequency filter 6 and the output filter 7 are provided to remove unnecessary signal components out of the baseband and the repeating transmission band, respectively. It is, therefore, possible to enhance the detection accuracy of a compensation quantity detector 2 for detecting frequency characteristics and to reduce influence on adjacent transmission bands. Besides, it is possible to compensate for the deterioration of the frequency characteristics caused by the intermediate frequency filter 6 and the output filter 7.

Moreover, even in the fifth embodiment, if the intermediate frequency filter 6 is provided in front of the compensation quantity detector 2 and the output filter 7 is provided in back of the amplifier 5, then it is possible to enhance the detection accuracy of the compensation quantity detector 2 for detecting frequency characteristics and to reduce influence on the adjacent transmission bands as in the case of this embodiment. In that case, however, it is impossible to compensate for the deterioration of frequency characteristics caused by the output filter 7.

### [Eighth Embodiment]

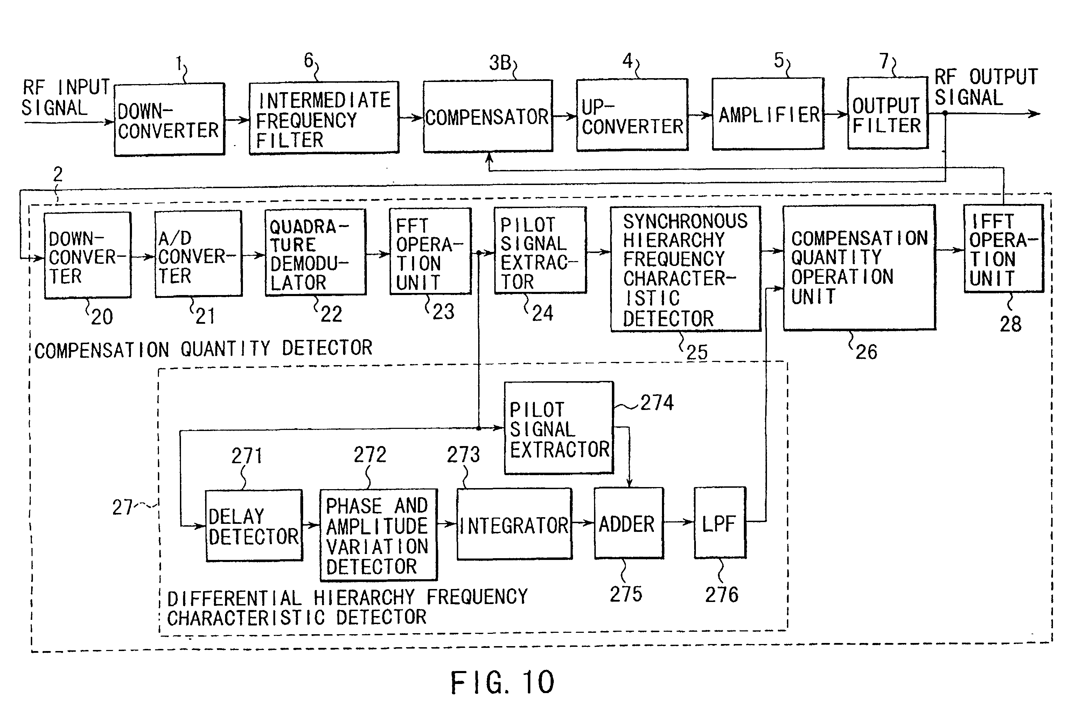

FIG. 10 shows the construction of a repeater in the eighth embodiment for use in the above-stated OFDM system digital terrestrial television broadcasting. It is noted that the same constituent elements shown in FIG. 10 as those in FIGS. 6 and 9 are denoted by the same reference symbols as those in FIGS. 6 and 9 and that description thereto will not be given herein.

The repeater in this embodiment is characterized in that the frequency characteristic detector 25 of the compensation quantity detector 2 in the construction of the seventh embodiment is used as a synchronous hierarchy frequency characteristic detector and that a differential hierarchy frequency characteristic detector 27 is added.

The differential hierarchy frequency characteristic detector 27 has the same construction as that of the differential hierarchy frequency characteristic detector 29 in the fourth embodiment shown in FIG. 5. The detector 27 inputs the output of an FFT operation unit 23 and detects the delay of the input signal in frequency domain direction using a delay detector 271. Next, the detector 27 obtains variations in amplitude and phase between adjacent carriers using a phase and amplitude variation detector 272, integrates the variations using an integrator 273 and thereby obtains the relative amplitude and phase characteristics of carriers.

Meanwhile, the detector 27 extracts only pilot signals having known phases and amplitudes arranged on the frequency domain from the output signal of the FFT operation unit 23 using a pilot signal extractor 274, adds the output of the integrator 273 using an adder 275 while the phases and amplitudes of the pilot signals are used as reference values. As a result, the phase and amplitude characteristics of all of carriers are obtained. Finally, the detector 27 filters the phase and amplitude characteristics of all of carriers in the time domain direction using an LPF 276, thereby removing influences of noise and the like received on transmission paths and outputting the result to a compensation quantity operation unit 26. The compensation operation unit 26 selectively switches and uses the detection result of the synchronous hierarchy frequency characteristic detector 25 and that of the differential hierarchy frequency characteristic detector 27.

The processing contents of the repeater having the above-stated construction will be described hereinafter.

As already stated above, in the ISBD-T system, the band of the OFDM transmission signal is divided into 13 segments, the OFDM transmission signal up to three hierarchies can be transmitted and a carrier modulation system such as QPSK, 16QAM and 64QAM can be selected for each hierarchy. DQPSK is also adopted as one of the carrier modulation systems in light of mobile reception.

In synchronous segments in which the carrier modulation system such as QPSK, 16QAM or 64QAM is adopted, an SP signal is transmitted for equalization to be conducted by a receiver side. In differential segments in which the carrier modulation system such as DQPSK is adopted, an SP signal is not necessary. Thus, the synchronous segments differ from the differential segments in the number of signals including CP signals, AC signals, TMCC signals and the like.

For the above reason, the repeater is required to process segments while separating the synchronous segments from the differential segments. According to the repeater in this embodiment, therefore, the output of the FFT operation unit 23 is distributed to two systems, one for processing the synchronous segments and the other for processing the differential segments. Since the synchronous segments can be processed in accordance with the processing contents described in the preceding embodiments, an detector denoted by reference symbol 25 is used as a synchronous hierarchy frequency characteristic detector. A differential hierarchy frequency characteristic detector 27 will be described hereinafter.

Namely, the differential hierarchy frequency characteristic detector 27 detects the delay of the output of the FFT operation unit 23 in frequency domain direction, obtains variations in amplitude and phase between adjacent carriers and integrates the variations, and thereby obtains the relative amplitude and phase characteristics of carriers. On the other hand, the detector 27 extracts only pilot signals having known phases and amplitudes arranged on the frequency domain from the output signal of the FFT operation unit 23, adds the integral output while using the phases and amplitudes of the pilot signals as reference values, and obtains the phase and amplitude characteristics of all carriers. Finally, the detector filters the phase and amplitude characteristics of all carriers in time domain direction, thereby removing influences of noise and the like received on transmission paths and outputting the result to the compensation quantity operation unit 26. The compensation quantity operation unit 26 selectively switches and uses the detection result of the synchronous hierarchy frequency characteristic detector 25 and that of the differential hierarchy frequency characteristic detector 27 according to the content of the hierarchy (segment).

With the above-stated construction, even if the transmission band is divided into hierarchies and the respective hierarchies adopt different modulation systems, synchronous or differential, it is possible to appropriately extract pilot signals of the respective hierarchies and to obtain the amplitude and phase compensation quantities. As in the case of the preceding embodiments, it is possible to easily adjust frequency characteristics and to appropriately compensate for transmission path characteristics varying according season, weather or time without using any special measurement unit or the like.

Needless to say, if the OFDM transmission signal has only one of the synchronous system and the differential system, it suffices to provide only a corresponding detector.

In the eighth embodiment, description has been given to the feed-back loop construction. It is also possible to configure the repeater of a feed-forward loop construction by omitting the down-converter 20 of the compensation quantity detector 2 and inputting the output of the down-converter 1 into the A/D converter 21 of the compensation quantity detector 2 as in the case of the fifth embodiment.

Description has been given to the above embodiments, while assuming that the OFDM signal includes pilot signals having known amplitudes and phases. In case of, for example, the DBPSK modulation system, it is possible to detect the amplitude and phase frequency characteristics not by using the pilot signals but by using data and to detect compensation quantities by obtaining the inverse characteristics to the above frequency characteristics.

As stated so far, the present invention can provide an OFDM transmission signal repeater capable of easily adjusting an OFDM transmission signal and appropriately compensating for transmission path characteristics varying according to season, weather or time.

## Claims

1. An OFDM transmission signal repeater for receiving an OFDM, orthogonal frequency division multiplexing, transmission signal including pilot signals having known amplitude and phase characteristics and carried on sub-carriers of the OFDM transmission signal, and for re-transmitting the OFDM transmission signal, the repeater comprising:
demodulation means (22) for demodulating a reception signal of the OFDM transmission signal;
conversion means (23) for converting a demodulation output of the demodulation means (22) from a time domain signal into a frequency domain signal;
pilot signal extraction means (24) for extracting the pilot signals having known amplitude and phase characteristics in the OFDM transmission signal from an output of the conversion means (23);
frequency characteristics detection means (25) for detecting an amplitude frequency characteristics and a phase frequency characteristics of the reception signal or the re-transmission signal using the pilot signals extracted by the pilot signal extraction means (24);
a compensation quantity operation means (26) for operating an amplitude compensation quantity and a phase compensation quantity from the amplitude frequency characteristics and the phase frequency characteristics detected by the frequency characteristics detection means (25); and
compensation means (3A, 3B) for compensating for an amplitude and a phase of the received OFDM transmission signal in accordance with the amplitude compensation quantity obtained by the compensation quantity operation means (26) and for generating a re-transmission signal,
wherein
when the OFDM transmission signal transmits a digital signal of a differential modulation system, the frequency characteristics detection means (27) is adapted to detect a delay of the frequency domain signal converted from the time domain signal in frequency domain direction, obtain and integrates variations in amplitude and phase between adjacent sub-carriers, obtain relative the amplitudes frequency characteristics and relative the phase frequency characteristics of the sub-carriers and adds together integral outputs while using the amplitudes and phases of the pilot signals of the respective sub-carriers extracted by the pilot signal extraction means (274) as reference values, and thereby obtain amplitudes frequency characteristics and phases frequency characteristics of all of the sub-carriers.

2. An OFDM transmission signal repeater for receiving an OFDM, orthogonal frequency division multiplexing, transmission signal including pilot signals having known amplitude and phase characteristics and carried on sub-carriers of the OFDM transmission signal, and for re-transmitting the OFDM transmission signal, the repeater comprising:
demodulation means (22) for demodulating a reception signal of the OFDM transmission signal;
conversion means (23) for converting a demodulation output of the demodulation means (22) from a time domain signal into a frequency domain signal;
pilot signal extraction means (24) for extracting the pilot signals having known amplitude and phase characteristics in the OFDM transmission signal from an output of the conversion means (23);
frequency characteristics detection means (25) for detecting an amplitude frequency characteristics and a phase frequency characteristics of the reception signal or the re-transmission signal using the pilot signals extracted by the pilot signal extraction means (24);
a compensation quantity operation means (26) for operating an amplitude compensation quantity and a phase compensation quantity from the amplitude frequency characteristics and the phase frequency characteristics detected by the frequency characteristics detection means (25); and
compensation means (3A, 3B) for compensating for an amplitude and a phase of the received OFDM transmission signal in accordance with the amplitude compensation quantity obtained by the compensation quantity operation means (26) and for generating a re-transmission signal,
wherein
when bands of the OFDM transmission signal are divided into hierarchies and the respective hierarchies selectively adopt one of a synchronous modulation and a differential modulation system,
the frequency characteristics detection means (25, 27) comprises a synchronous hierarchy characteristic detection section (25) for interpolating the pilot signals of the respective sub-carriers extracted by the pilot signal extraction means (24) in symbol units in time direction and detecting overall amplitudes frequency characteristics and overall phases frequency characteristics; and a differential hierarchy characteristic detection section (27) for detecting a delay of the frequency domain signal converted from the time domain signal in frequency domain direction, obtaining and integrating variations in amplitude and phase between adjacent sub-carriers, obtaining relative the amplitudes frequency characteristics and relative the phase frequency characteristics of the sub-carriers, adding together integral outputs while using the amplitudes and phases of the pilot signals of the respective sub-carriers extracted by the pilot signal extraction means (274) as reference values, and thereby obtaining amplitudes frequency characteristics and phases frequency characteristics of all of the sub-carriers; and
the compensation quantity operation means (26, 28) is adapted to selectively switch and use a detection result of the synchronous hierarchy characteristic detection section (25) and a detection result of the differential hierarchy characteristic section (27) in accordance with a content of each hierarchy.

3. An OFDM transmission signal repeater according to claim 1 or 2, wherein
the compensation quantity operation means (26) is adapted to generate a compensation signal on a frequency domain; and
the compensation means (3A) is adapted to compensate for an amplitude and a phase of the received OFDM signal on the frequency domain.

4. An OFDM transmission signal repeater according to claim 1 or 2, wherein
the compensation quantity operation means (26) is adapted to generate a compensation signal on a time domain; and
the compensation means (3A) is adapted to compensate for an amplitude and a phase of the received OFDM signal on the time domain.

5. An OFDM transmission signal repeater according to claim 4, wherein
the compensation quantity operation means (26) is adapted to convert the amplitude frequency characteristics and the phase frequency characteristics detected by the frequency characteristics detection means (25) into time domain characteristics and obtains inverse characteristics to the time domain characteristics, thereby operating the amplitude compensation quantity and the phase compensation quantity on the time domain.

6. An OFDM transmission signal repeater according to claim 4, wherein
the compensation quantity operation means (26, 28) is adapted to convert inverse characteristics to both the amplitude frequency characteristics and the phase frequency characteristics detected by the frequency characteristics detection means (25), and convert the obtained time domain characteristics, thereby operating the amplitude compensation quantity and the phase compensation quantity on the time domain.

7. An OFDM transmission signal repeater according to any of the preceding claims, wherein
a filter (6) is provided for removing unnecessary signal components out of specified bands at least before the demodulation means (22) carries out demodulation processing.

## Patentansprüche

1. Ein OFDM-Sendesignalzwischenverstärker zum Empfangen eines OFDM-Sendesignals bzw. Orthogonalfrequenzmultiplexsendesignals einschließlich eines Pilotsignals mit bekannten Amplituden- und Phasencharakteristika und aufmoduliert auf Subträgern des OFDM-Sendesignals und zum Weitersenden des OFDM-Sendesignals, wobei der Zwischenverstärker umfasst:
Demodulationsmittel (22) zum Demodulieren eines Empfangssignals des OFDM-Sendesignals;
Umsetzmittel (23) zum Umsetzen einer Demodulationsausgangsgröße des Demodulationsmittels (22) von einem Zeitbereichsignal in ein Frequenzbereichsignal;
Pilotsignal-Extraktionsmittel (24) zum Extrahieren des Pilotsignals mit bekannten Amplituden- und Phasencharakteristika in dem OFDM-Sendesignal von einer Ausgangsgröße des Umsetzmittels (23);
Frequenzcharakteristik-Erfassungsmittel (25) zum Erfassen von Amplituden-Frequenzcharakteristika und Phasen-Frequenzcharakteristika des Empfangssignals oder des Weitersendesignals unter Verwendung des Pilotsignals, das von dem Pilotsignal-Extraktionsmittel (24) extrahiert worden ist; ein Kompensationsgrößen-Betriebsmittel (26) zum Erarbeiten einer Amplituden-Kompensationsgröße und einer Phasen-Kompensationsgröße aus den Amplituden-Frequenzcharakteristika und den Phasen-Frequenzcharakteristika, die von dem Frequenzcharakteristik-Erfassungsmittel (25) erfasst worden sind; und
Kompensationsmittel (3A, 3B) zum Kompensieren einer Amplitude und einer Phase des empfangenen OFDM-Sendesignals in Übereinstimmung mit der Amplituden-Kompensationsgröße, die von dem Kompensationsgrößen-Betriebsmittel (26) erhalten worden ist und zum Generieren eines Weitersendesignals,
wobei
wenn das OFDM-Sendesignal ein Digitalsignal eines Differenzmodulationssystems überträgt, das Frequenzcharakteristik-Erfassungsmittel (27) angepasst ist, zum Erfassen einer Verzögerung des Frequenzbereichssignals, das aus dem Zeitbereichsignal in Frequenzbereichsrichtung umgesetzt worden ist, zum Erhalten und Integrieren von Variationen in der Amplitude und Phase zwischen benachbarten Subträgern, zum relativen Erhalten der Amplituden-Frequenzcharakteristika und relativen Erhalten der Phasencharakteristika der Subträger und zum Zusammenaddieren integraler Ausgangsgrößen während des Verwendens der Amplituden und Phasen der Pilotsignale der jeweiligen Subträger, die von dem Pilotsignal-Extraktionsmittel (274) extrahiert worden sind als Referenzwerte und dadurch erhalten von Amplituden-Frequenzcharakteristika und Phasen-Frequenzcharakteristika aller Subträger.

2. Ein OFDM-Sendesignalzwischenverstärker zum Empfangen eines OFDM-Sendesignals bzw. Orthogonalfrequenzmultiplexsendesignals einschließlich eines Pilotsignals mit bekannten Amplituden- und Phasencharakteristika und aufmoduliert auf Subträgern des OFDM-Sendesignals und zum Weitersenden des OFDM-Sendesignals, wobei der Zwischenverstärker umfasst:
Demodulationsmittel (22) zum Demodulieren eines Empfangssignals des OFDM-Sendesignals;
Umsetzmittel (23) zum Umsetzen einer Demodulationsausgangsgröße des Demodulationsmittels (22) von einem Zeitbereichsignal in ein Frequenzbereichsignal;
Pilotsignal-Extraktionsmittel (24) zum Extrahieren des Pilotsignals mit bekannten Amplituden- und Phasencharakteristika in dem OFDM-Sendesignal von einer Ausgangsgröße des Umsetzmittels (23);
Frequenzcharakteristik-Erfassungsmittel (25) zum Erfassen von Amplituden-Frequenzcharakteristika und Phasen-Frequenzcharakteristika des Empfangssignals oder des Weitersendesignals unter Verwendung des Pilotsignals, das von dem Pilotsignal-Extraktionsmittel (24) extrahiert worden ist;
ein Kompensationsgrößen-Betriebsmittel (26) zum Erarbeiten einer Amplituden-Kompensationsgröße und einer Phasen-Kompensationsgröße aus den Amplituden-Frequenzcharakteristika und den Phasen-Frequenzcharakteristika, die von dem Frequenzcharakteristik-Erfassungsmittel (25) erfasst worden sind; und
Kompensationsmittel (3A, 3B) zum Kompensieren einer Amplitude und einer Phase des empfangenen OFDM-Sendesignals in Übereinstimmung mit der Amplituden-Kompensationsgröße, die von dem Kompensationsgrößen-Betriebsmittel (26) erhalten worden ist und zum Generieren eines Weitersendesignals,
wobei
wenn Bänder des OFDM-Sendesignals aufgeteilt sind in Hierarchien und die jeweiligen Hierarchien selektiv eines von einem Synchronmodulations- und einem Differenzmodulationssystem annehmen,
das Frequenzcharakteristik-Erfassungsmittel (25) einen Synchronhierarchie-Charakteristikerfassungsabschnitt (25) umfasst zum Interpolieren der Pilotsignale der jeweiligen Subträger, die von dem Pilotsignal-Extraktionsmittel (24) extrahiert worden sind in Symboleinheiten in Zeitrichtung und zum Erfassen der Gesamtamplituden-Frequenzcharakteristika und der Gesamtphasen-Frequenzcharakteristika; und einen Differenzhierarchiecharakteristikerfassungs-Abschnitt (27) zum Erfassen einer Verzögerung des Frequenzbereichssignals, das umgesetzt ist aus dem Zeitbereichssignal in Frequenzbereichsrichtung, zum Erhalten und Integrieren von Amplitudenvariationen und Phasenvariationen zwischen benachbarten Subträgern, zum relativen Erhalten der Amplituden-Frequenzcharakteristika und relativen Erhalten der Phasen-Frequenzcharakteristika der Subträger, zum Zusammenaddieren integraler Ausgangsgrößen unter Verwendung der Amplituden und Phasen der Pilotsignale der jeweiligen Subträger, die extrahiert worden sind von dem Pilotsignal-Extraktionsmittel (274) als Referenzwerte und dadurch zum Erhalten von Amplituden-Frequenzcharakteristika und Phasen-Frequenzcharakteristika aller Subträger; und
das Kompensationsgrößen-Betriebsmittel (26, 28) angepasst ist zum selektiven Schalten und Verwenden eines Erfassungsergebnisses des Synchronhierarchie-Charakteristikerfassungsabschnitts (25) und eines Erfassungsergebnisses des Differenzhierarchiecharakteristik-Abschnitts (27) in Übereinstimmung mit einem Inhalt jeder Hierarchie.

3. OFDM-Sendesignalzwischenverstärker nach Anspruch 1 oder 2, wobei
das Kompensationsgrößen-Betriebsmittel (26) angepasst ist zum Generieren eines Kompensationssignals in einem Frequenzbereich; und
das Kompensationsmittel (3a) angepasst ist zum Kompensieren einer Amplitude und einer Phase des empfangenen OFDM-Signals im Frequenzbereich.

4. OFDM-Sendesignalzwischenverstärker nach Anspruch 1 oder 2, wobei das Kompensationsgrößen-Betriebsmittel (26) angepasst ist zum Generieren eines Kompensationssignals in einem Zeitbereich; und
das Kompensationsmittel (3a) angepasst ist zum Kompensieren einer Amplitude und einer Phase des empfangenen OFDM-Signals im Zeitbereich.

5. OFDM-Sendesignalzwischenverstärker nach Anspruch 4, wobei
das Kompensationsgrößen-Betriebsmittel (26) angepasst ist zum Umsetzen der Amplituden-Frequenzcharakteristika und den Phasen-Frequenzcharakteristika, die von dem Frequenzcharakteristik-Erfassungsmittel (25) erfasst worden sind in Zeitbereichscharakteristika und zum Erhalten inverser Charakteristika zu den Zeitbereichscharakteristika, hierdurch die Amplituden-Kompensationsgröße und die Phasen-Kompensationsgröße im Zeitbereich erarbeitend.

6. OFDM-Sendesignalzwischenverstärker nach Anspruch 4, wobei das Kompensationsgrößen-Betriebsmittel (26, 28) angepasst ist zum Umsetzen inverser Charakteristika in sowohl Amplituden-Frequenzcharakteristika als auch Phasen-Frequenzcharakteristika, die erfasst worden sind von dem Frequenzcharakteristik-Erfassungsmittel (25) und zum Umsetzen der erhaltenen Zeitbereichscharakteristika, hierdurch die Amplituden-Kompensationsgröße und die Phasen-Kompensationsgröße im Zeitbereich erarbeitend.

7. OFDM-Sendesignalzwischenverstärker nach einem der vorhergehenden Ansprüche, wobei ein Filter (6) vorgesehen ist zum Entfernen unnötiger Signalkomponenten aus spezifizierten Bändern zumindest bevor das Demodulationsmittel (22) die Demodulationsverarbeitung ausführt.

## Revendications

1. Répéteur de signal d'émission MRFO pour recevoir un signal d'émission MRFO, de multiplexage par répartition en fréquence orthogonale, comprenant des signaux pilotes ayant des caractéristiques d'amplitude et de phase connues et transportés sur des sous-porteuses du signal d'émission MRFO, et pour retransmettre le signal d'émission MRFO, le répéteur comprenant :
des moyens de démodulation (22) pour démoduler un signal de réception du signal d'émission MRFO ;
des moyens de conversion (23) pour convertir une sortie de démodulation des moyens de démodulation (22) d'un signal dans le domaine temporel en un signal dans le domaine fréquentiel ;
des moyens d'extraction de signal pilote (24) pour extraire les signaux pilotes ayant des caractéristiques d'amplitude et de phase connues dans le signal d'émission MRFO d'une sortie des moyens de conversion (23) ;
des moyens de détection de caractéristiques fréquentielles (25) pour détecter des caractéristiques fréquentielles d'amplitude et des caractéristiques fréquentielles de phase du signal de réception ou du signal de retransmission en utilisant les signaux pilotes extraits par les moyens d'extraction de signal pilote (24) ;
des moyens de mise en oeuvre de quantité de compensation (26) pour mettre en oeuvre une quantité de compensation d'amplitude et une quantité de compensation de phase à partir des caractéristiques fréquentielles d'amplitude et des caractéristiques fréquentielles de phase détectées par les moyens de détection de caractéristiques fréquentielles (25) ; et
des moyens de compensation (3A, 3B) pour compenser une amplitude et une phase du signal d'émission MRFO reçu conformément à la quantité de compensation d'amplitude obtenue par les moyens de mise en oeuvre de quantité de compensation (26) et pour générer un signal de retransmission,
dans lequel
lorsque le signal d'émission MRFO transmet un signal numérique d'un système de modulation différentielle, les moyens de détection de caractéristiques fréquentielles (27) sont adaptés pour détecter un retard du signal dans le domaine fréquentiel obtenu par conversion du signal dans le domaine temporel dans la direction du domaine fréquentiel, pour obtenir et intégrer les variations d'amplitude et de phase entre des sous-porteuses adjacentes, pour obtenir des caractéristiques fréquentielles d'amplitude relative et des caractéristiques fréquentielles de phase relative des sous-porteuses et pour ajouter les unes aux autres des sorties intégrées tout en utilisant les amplitudes et les phases des signaux pilotes des sous-porteuses respectives extraits par les moyens d'extraction de signal pilote (274) en tant que valeurs de référence, et pour obtenir de ce fait les caractéristiques fréquentielles d'amplitude et les caractéristiques fréquentielles de phase de toutes les sous-porteuses.

2. Répéteur de signal d'émission MRFO pour recevoir un signal d'émission MRFO, de multiplexage par répartition en fréquence orthogonale, comprenant des signaux pilotes ayant des caractéristiques d'amplitude et de phase connues et transportés sur des sous-porteuses du signal d'émission MRFO, et pour retransmettre le signal d'émission MRFO, le répéteur comprenant :
des moyens de démodulation (22) pour démoduler un signal de réception du signal d'émission MRFO ;
des moyens de conversion (23) pour convertir une sortie de démodulation des moyens de démodulation (22) d'un signal dans le domaine temporel en un signal dans le domaine fréquentiel ;
des moyens d'extraction de signal pilote (24) pour extraire les signaux pilotes ayant des caractéristiques d'amplitude et de phase connues dans le signal d'émission MRFO d'une sortie des moyens de conversion (23) ;
des moyens de détection de caractéristiques fréquentielles (25) pour détecter des caractéristiques fréquentielles d'amplitude et des caractéristiques fréquentielles de phase du signal de réception ou du signal de retransmission en utilisant les signaux pilotes extraits par les moyens d'extraction de signal pilote (24) ;
des moyens de mise en oeuvre de quantité de compensation (26) pour mettre en oeuvre une quantité de compensation d'amplitude et une quantité de compensation de phase à partir des caractéristiques fréquentielles d'amplitude et des caractéristiques fréquentielles de phase détectées par les moyens de détection de caractéristiques fréquentielles (25) ; et
des moyens de compensation (3A, 3B) pour compenser une amplitude et une phase du signal d'émission MRFO reçu conformément à la quantité de compensation d'amplitude obtenue par les moyens de mise en oeuvre de quantité de compensation (26) et pour générer un signal de retransmission,
dans lequel
lorsque des bandes du signal d'émission MRFO sont divisées en hiérarchies et que les hiérarchies respectives adoptent de manière sélective l'un d'un système de modulation synchrone et d'un système de modulation différentielle,
les moyens de détection de caractéristiques fréquentielles (25, 27) comprennent une section de détection de caractéristiques de hiérarchie synchrone (25) pour interpoler les signaux pilotes des sous-porteuses respectives extraits par les moyens d'extraction de signal pilote (24) dans des unités de symbole dans la direction temporelle et pour détecter les caractéristiques fréquentielles d'amplitude globale et les caractéristiques fréquentielles de phase globale ; et une section de détection de caractéristiques de hiérarchie différentielle (27) pour détecter un retard du signal dans le domaine fréquentiel obtenu par la conversion du signal dans le domaine temporel dans la direction du domaine fréquentiel, pour obtenir et intégrer les variations d'amplitude et de phase entre des sous-porteuses adjacentes, pour obtenir les caractéristiques fréquentielles d'amplitude relative et les caractéristiques fréquentielles de phase relative des sous-porteuses, pour ajouter les unes aux autres les entrées intégrées tout en utilisant les amplitudes et les phases des signaux pilotes des sous-porteuses respectives extraits par les moyens d'extraction de signal pilote (274) en tant que valeurs de référence, et pour obtenir de ce fait les caractéristiques fréquentielles d'amplitude et les caractéristiques fréquentielles de phase de toutes les sous-porteuses ; et
les moyens de mise en oeuvre de quantité de compensation (26, 28) sont adaptés pour effectuer une commutation sélective et pour utiliser un résultat de détection de la section de détection de caractéristiques de hiérarchie synchrone (25) et un résultat de détection de la section de caractéristiques de hiérarchie différentielle (27) conformément à un contenu de chaque hiérarchie.

3. Répéteur de signal d'émission MRFO selon la revendication 1 ou 2, dans lequel
les moyens de mise en oeuvre de quantité de compensation (26) sont adaptés pour générer un signal de compensation dans un domaine fréquentiel ; et
les moyens de compensation (3A) sont adaptés pour compenser une amplitude et une phase du signal MRFO reçu dans le domaine fréquentiel.

4. Répéteur de signal d'émission MRFO selon la revendication 1 ou 2, dans lequel
les moyens de mise en oeuvre de quantité de compensation (26) sont adaptés pour générer un signal de compensation dans le domaine temporel ; et
les moyens de compensation (3A) sont adaptés pour compenser une amplitude et une phase du signal MRFO reçu dans le domaine temporel.

5. Répéteur de signal d'émission MRFO selon la revendication 4, dans lequel
les moyens de mise en oeuvre de quantité de compensation (26) sont adaptés pour convertir les caractéristiques fréquentielles d'amplitude et les caractéristiques fréquentielles de phase détectées par les moyens de détection de caractéristiques fréquentielles (25) en caractéristiques dans le domaine temporel et pour obtenir des caractéristiques inverses des caractéristiques dans le domaine temporel, mettant en oeuvre de ce fait la quantité de compensation d'amplitude et la quantité de compensation de phase dans le domaine temporel.

6. Répéteur de signal d'émission MRFO selon la revendication 4, dans lequel
les moyens de mise en oeuvre de quantité de compensation (26, 28) sont adaptés pour convertir les caractéristiques inverses à la fois des caractéristiques fréquentielles d'amplitude et des caractéristiques fréquentielles de phase détectées par les moyens de détection de caractéristiques fréquentielles (25) et pour convertir les caractéristiques dans le domaine temporel obtenues, mettant en oeuvre de ce fait la quantité de compensation d'amplitude et la quantité de compensation de phase dans le domaine temporel.

7. Répéteur de signal d'émission MRFO selon l'une quelconque des revendications précédentes, dans lequel
un filtre (6) est prévu pour retirer les composantes de signal inutiles en dehors des bandes spécifiées au moins avant que les moyens de détection (22) n'effectuent un traitement de démodulation.
